# EUROPEAN PATENT APPLICATION

(11) **EP 4 716 058 A1**
(43) Date of publication of application: **25.03.2026**
(21) Application number: 25201018.6
(22) Date of filing: 09.09.2025
(51) Int. Cl.: H02J 7/02, H02J 9/06, H02M 3/335

(54) **UNINTERRUPTIBLE POWER SUPPLY SYSTEM**

(30) Priority: 12.09.2024 CN 202411276367
(71) Applicant: Delta Electronics, Inc., Taoyuan City 333 (TW)
(72) Inventor: YAN, Yung-Sheng, 333 Taoyuan City (TW); PENG, Kuo-Chang, 333 Taoyuan City (TW)
(74) Representative: Riccardi, Elisa

(57) **Abstract**

An uninterruptible power supply system includes a bidirectional AC-DC converter, a resonant converter, an automatic voltage regulation circuit and a control unit. When an AC input voltage is out of a predetermined voltage range and within a voltage regulation range, the automatic voltage regulation circuit, the resonant converter and the bidirectional AC-DC converter generate an AC supplementary voltage at an output terminal based on the AC input voltage and generate an AC output voltage based on the AC input voltage and the AC supplementary voltage, so that the AC output voltage is within the predetermined voltage range. When the AC input voltage is out of the voltage regulation range, the resonant converter and the bidirectional AC-DC converter generate the AC output voltage at the output terminal based on discharge voltage of a battery, so that the AC output voltage is within the predetermined range.

## Description

### BACKGROUND

### Field of Invention

The disclosure relates to an uninterruptible power supply system. More particularly, the disclosure relates to an uninterruptible power supply system with high efficiency.

### Description of Related Art

Currently, the interactive uninterruptible power supply (UPS) available on the market primarily adopts a low-frequency automatic voltage regulation (AVR) circuit with a frequency of about 50-60 Hz, and is used to regulate mains voltage and to charge and discharge a battery.

However, the low-frequency AVR circuit has the disadvantages of high cost due to the amount of components, large size, and heavy weight. In addition, the low-frequency AVR circuit has high iron loss under light load and high copper loss under heavy load, resulting in poor efficiency. Therefore, the existing UPS needs to be improved to address the aforementioned technical issues.

### SUMMARY

An uninterruptible power supply system is configured to be coupled to an AC input voltage and a battery, and includes a bidirectional AC-DC converter, a resonant converter, an automatic voltage regulation circuit and a control unit. The bidirectional AC-DC converter is configured to be coupled to a power input terminal to receive the AC input voltage and is configured to be coupled to a power output terminal to output an AC output voltage. The resonant converter is coupled to the bidirectional AC-DC converter, and is configured to be coupled to the battery. The resonant converter includes a transformer. The transformer includes a magnetic core, a first winding, a second winding, and a third winding. The first winding, the second winding, and the third winding are wound on the magnetic core. The automatic voltage regulation circuit is coupled to the bidirectional AC-DC converter and the third winding of the transformer, and is configured to be coupled to the power input terminal and the power output terminal. The control unit is coupled to the bidirectional AC-DC converter, the resonant converter, and the automatic voltage regulation circuit. When the AC input voltage is out of a predetermined voltage range and is within a voltage regulation range, the control unit sets the automatic voltage regulation circuit, the resonant converter, and the bidirectional AC-DC converter to generate an AC supplementary voltage at the power output terminal based on the AC input voltage and to generate the AC output voltage based on the AC input voltage and the AC supplementary voltage, so that the AC output voltage is within the predetermined voltage range. When the AC input voltage is out of the voltage regulation range, the control unit sets the resonant converter and the bidirectional AC-DC converter to generate the AC output voltage at the power output terminal based on a discharge voltage of the battery, so that the AC output voltage is within the predetermined voltage range. A maximum value of the voltage regulation range is greater than a maximum value of the predetermined voltage range, and a minimum value of the voltage regulation range is less than a minimum value of the predetermined voltage range.

The uninterruptible power supply system of the disclosure may improve efficiency and may reduce cost due to the amount of components through the abovementioned architecture and operation.

### BRIEF DESCRIPTION OF THE DRAWINGS

The disclosure can be more fully understood by reading the following detailed description of the embodiment, with reference made to the accompanying drawings as follows:
Fig. 1 is a block diagram of an uninterruptible power supply system according to an embodiment of the disclosure.
Fig. 2A is a partial circuit/block diagram of the uninterruptible power supply system according to the embodiment of Fig. 1.
Fig. 2B is a circuit diagram of the embodiment of Fig. 2A.
Fig. 3A is a schematic diagram of the uninterruptible power supply system operating in a bypass mode according to the embodiment of Figs. 1 to 2.
Fig. 3B is a schematic diagram of the uninterruptible power supply system operating in a voltage regulation mode with step-down output according to the embodiment of Figs. 1 to 2.
Fig. 3C is a schematic diagram of the uninterruptible power supply system operating in a voltage regulation mode with step-up output according to the embodiment of Figs. 1 to 2.
Fig. 3D is a schematic diagram of the uninterruptible power supply system operating in a battery-powered mode according to the embodiment of Figs. 1 to 2.
Fig. 4 illustrates conversion circuits of the uninterruptible power supply system operating in various operation modes according to an embodiment.

### DETAILED DESCRIPTION

The terms used in the entire specification and the scope of the disclosure, unless otherwise specified, generally have the ordinary meaning of each term used in the field, the content disclosed herein, and the particular content.

The terms "coupled" or "connected" as used herein may mean that two or more elements are directly in physical or electrical contact, or are indirectly in physical or electrical contact with each other. It can also mean that two or more elements interact with each other.

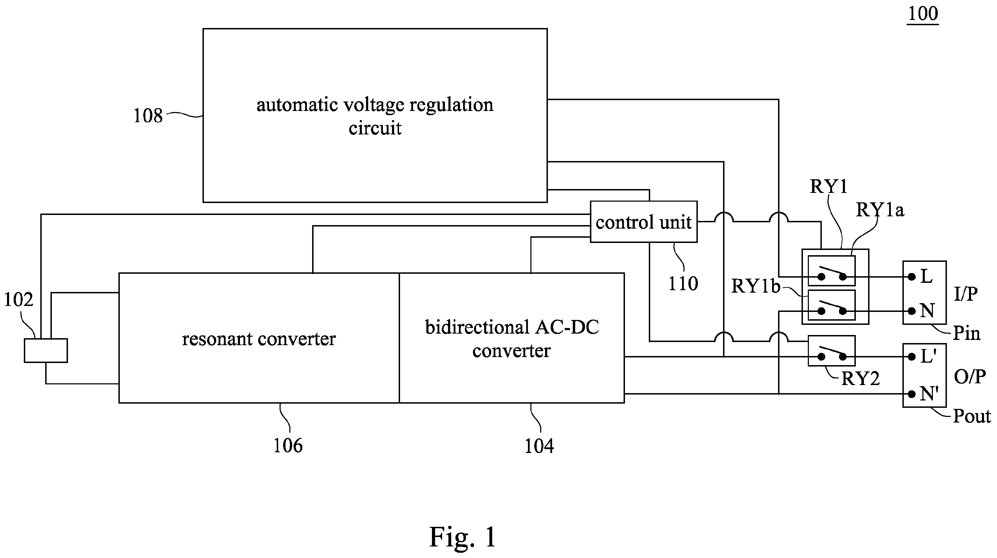

Referring to Fig. 1, which is a block diagram of an uninterruptible power supply system 100 according to an embodiment of the disclosure. As shown in Fig. 1, the uninterruptible power supply system 100 is configured to be coupled to an AC input voltage I/P and a battery 102, and includes a first relay RY1, a second relay RY2, a bidirectional AC-DC converter 104, a resonant converter 106, and an automatic voltage regulation circuit 108.

In an embodiment, the AC input voltage I/P may be supplied by mains voltage, the battery 102 may be a power storage device with charging and discharging functions, such as a lead-acid battery, a nickel-cadmium battery, a nickel metal hydride battery, and a lithium-ion battery. When the AC input voltage I/P is within a predetermined voltage range, the uninterruptible power supply system 100 uses the AC input voltage I/P as a power source to charge the battery 102, and at the same time generates an AC output voltage O/P based on the AC input voltage I/P to supply power to the load. For example, the AC input voltage I/P may be directly bypassed as the AC output voltage O/P to supply power to the load. When the AC input voltage I/P is out of the predetermined voltage range (for example, the AC input voltage I/P is higher or lower than the predetermined voltage range but still within a voltage regulation range), the uninterruptible power supply system 100 may generate an appropriate AC output voltage O/P based on the AC input voltage I/P to supply power to the load through the automatic voltage regulation circuit 108, so that the AC output voltage O/P is within the predetermined voltage range. When the AC input voltage I/P is abnormal (for example, power failure, voltage too low, voltage too high, etc., resulting in the AC input voltage I/P being out of the voltage regulation range of the uninterruptible power supply system 100), the uninterruptible power supply system 100 generates the AC output voltage O/P with the power stored in the battery 102 to supply power to the load, so that the AC output voltage O/P is within the predetermined voltage range.

The bidirectional AC-DC converter 104 may perform an AC-DC conversion or a DC-AC conversion based on the setting (i.e., control) of the control unit 110. The resonant converter 106 may be a bidirectional LLC full-bridge converter or other suitable bidirectional DC-DC converters. The automatic voltage regulation circuit 108 may be a high-frequency automatic voltage regulation circuit. For example, compared to the mains frequency of 50-60 Hz, the control unit 110 sets the switching of a switching circuit of the automatic voltage regulation circuit 108 at a frequency of 10 times or more higher (e.g., higher than 1kHz) to perform voltage regulation.

The uninterruptible power supply system 100 charges the battery 102 based on the mains voltage, generates the AC output voltage O/P based on the mains voltage to supply power, or generates the AC output voltage O/P based on the discharge of the battery 102.

The control unit 110 of the uninterruptible power supply system 100 uses high-frequency control signal to set the conducting/non-conducting states of the switching circuits of the bidirectional AC-DC converter 104, the resonant converter 106, and/or the automatic voltage regulation circuit 108 to perform voltage regulation of the AC output voltage O/P and charging and discharging of the battery 102. The switching circuit may be formed by semiconductor components (e.g., switch formed by transistors, diodes, and/or other circuit elements) and is configured to regulate and compensate the AC output voltage O/P through the resonant converter 106, bidirectional AC-DC converter 104, and the automatic voltage regulation circuit 108. Compared to low-frequency automatic voltage regulators, the uninterruptible power supply system 100 has fewer relays, and the transformer TR operating at high frequency has lower iron losses under light load and copper losses under heavy load. Therefore, the uninterruptible power supply system 100 may reduce cost due to the amount of components, machine weight and volume, as well as copper and iron losses, thereby improving efficiency.

With respect to technical contents related to the circuit structure and functional operation of the first relay RY1, the second relay RY2, the bidirectional AC-DC converter 104, the resonant converter 106, and the automatic voltage regulation circuit 108 of the uninterruptible power supply system 100, please refer to the following description.

In the uninterruptible power supply system 100, a power input terminal Pin has a live wire terminal L and a neutral wire terminal N, a power output terminal Pout has a live wire terminal L' and a neutral wire terminal N'. The first relay RY1 is configured to be coupled to the power input terminal Pin and the bidirectional AC-DC converter 104, and is configured to receive or disconnect the AC input voltage I/P. In an embodiment, the first relay RY1 includes a first input relay RY1a and a first neutral relay RY1b. The first input relay RY1a is coupled to the live wire terminal L of the power input terminal Pin, and the first neutral relay RY1b is coupled to the neutral wire terminal N of the power input terminal Pin and the neutral wire terminal N' of the power output terminal Pout.

The second relay RY2 is configured to be coupled to the power output terminal Pout and the bidirectional AC-DC converter 104, and is configured to output the AC output voltage O/P.

The bidirectional AC-DC converter 104 is configured to be coupled to the power input terminal Pin through the first relay RY1 to receive the AC input voltage I/P, and is configured to be coupled to the power output terminal Pout through the second relay RY2.

The resonant converter 106 is coupled to the bidirectional AC-DC converter 104, and is configured to be coupled to the battery 102.

The automatic voltage regulation circuit 108 is coupled to the bidirectional AC-DC converter 104, and is configured to be coupled to the live wire terminal L of the power input terminal Pin and the live wire terminal L' of the power output terminal Pout. The automatic voltage regulation circuit 108 is coupled to the live wire terminal L of the power input terminal Pin through the first relay RY1, and is coupled to the live wire terminal L' of the power output terminal Pout through the second relay RY2.

The uninterruptible power supply system 100 further includes a control unit 110. The control unit 110 is coupled to at least one of the first relay RY1, the second relay RY2, the battery 102, the bidirectional AC-DC converter 104, the resonant converter 106, and the automatic voltage regulation circuit 108 to control the operation of the first relay RY1, the second relay RY2, the battery 102, the bidirectional AC-DC converter 104, the resonant converter 106, and the automatic voltage regulation circuit 108, respectively. For example, the control unit 110 may send a control signal to the first relay RY1 and the second relay RY2 to control the conducting/non-conducting states of the first relay RY1 and the second relay RY2, and the control unit 110 may send a control signal to the bidirectional AC-DC converter 104, the resonant converter 106 and the automatic voltage regulation circuit 108 to control the conducting/non-conducting states of the switches in the bidirectional AC-DC converter 104, the resonant converter 106 and the automatic voltage regulation circuit 108. In an embodiment, the control unit 110 may control the bidirectional AC-DC converter 104 to perform functions such as active power filter (APF) or power factor correction (PFC). In an embodiment, the control unit 110 may include one or more circuit elements such as a micro control unit (MCU) or a central processing unit (CPU).

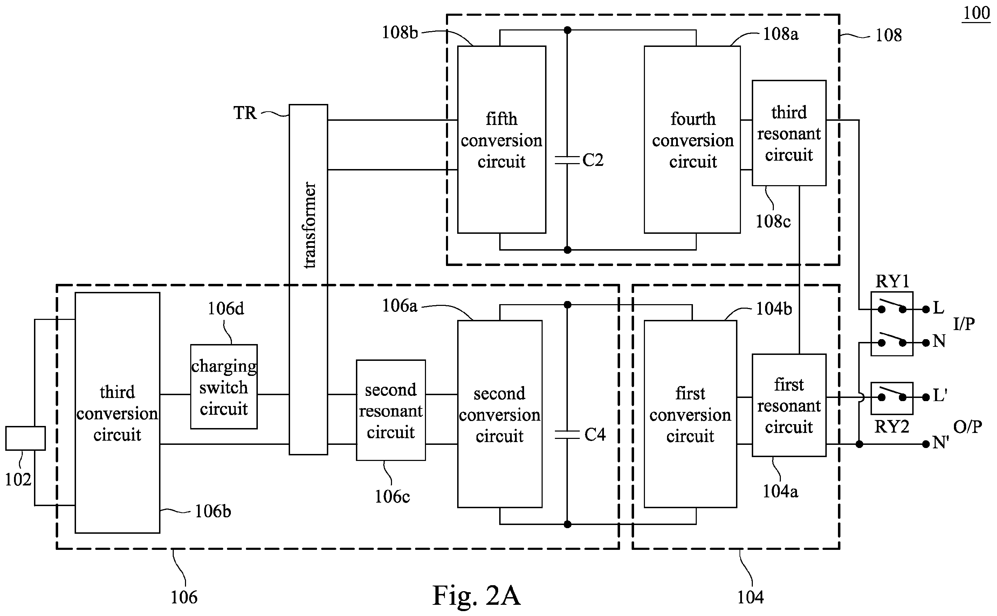

Please refer to Fig. 2A, which is a partial circuit/block diagram of the uninterruptible power supply system 100 of Fig. 1. For ease of illustration, Fig. 2A only shows the first relay RY1, the second relay RY2, the battery 102, the bidirectional AC-DC converter 104, the resonant converter 106 and the automatic voltage regulation circuit 108.

In the embodiment of Fig. 2A, the bidirectional AC-DC converter 104 includes a first resonant circuit 104a and a first conversion circuit 104b. The first conversion circuit 104b is coupled to the first resonant circuit 104a, the first resonant circuit 104a is coupled to the automatic voltage regulation circuit 108 and the power output terminal Pout.

In the embodiment of Fig. 2A, the resonant converter 106 includes a second conversion circuit 106a, a third conversion circuit 106b, a second resonant circuit 106c, a charging switch circuit 106d, a fourth capacitor C4, and the transformer TR. The second conversion circuit 106a is coupled to the first conversion circuit 104b. The fourth capacitor C4 is coupled to the first conversion circuit 104b and the second conversion circuit 106a. The second resonant circuit 106c is coupled to the second conversion circuit 106a. The transformer TR is coupled to the second resonant circuit 106c and the charging switch circuit 106d. The charging switch circuit 106d is coupled to the transformer TR and the third conversion circuit 106b. The third conversion circuit 106b is coupled to the charging switch circuit 106d and the transformer TR. The battery 102 is coupled to the third conversion circuit 106b. In addition, the charging switch circuit 106d may be disposed at other appropriate locations. In other embodiment, the charging switch circuit 106d is disposed between the battery 102 and the third conversion circuit 106b, and the control unit 110 sets the conducting/non-conducting state of the charging switch circuit 106d to enable the battery 102 to charge or discharge. In other embodiment, the charging switch circuit is disposed in the battery 102, and the control unit 110 does not set the conducting/non-conducting state of the charging switch circuit. In other embodiment, the charging switch circuit 106d may be omitted.

In the embodiment of Fig. 2A, the automatic voltage regulation circuit 108 includes a fourth conversion circuit 108a, a fifth conversion circuit 108b, a third resonant circuit 108c, and a second capacitor C2. The third resonant circuit 108c is coupled to the power input terminal Pin and the first resonant circuit 104a. The fourth conversion circuit 108a is coupled to the third resonant circuit 108c. The second capacitor C2 is coupled to the fourth conversion circuit 108a. The fifth conversion circuit 108b is coupled to the fourth conversion circuit 108a, the second capacitor C2, and the transformer TR.

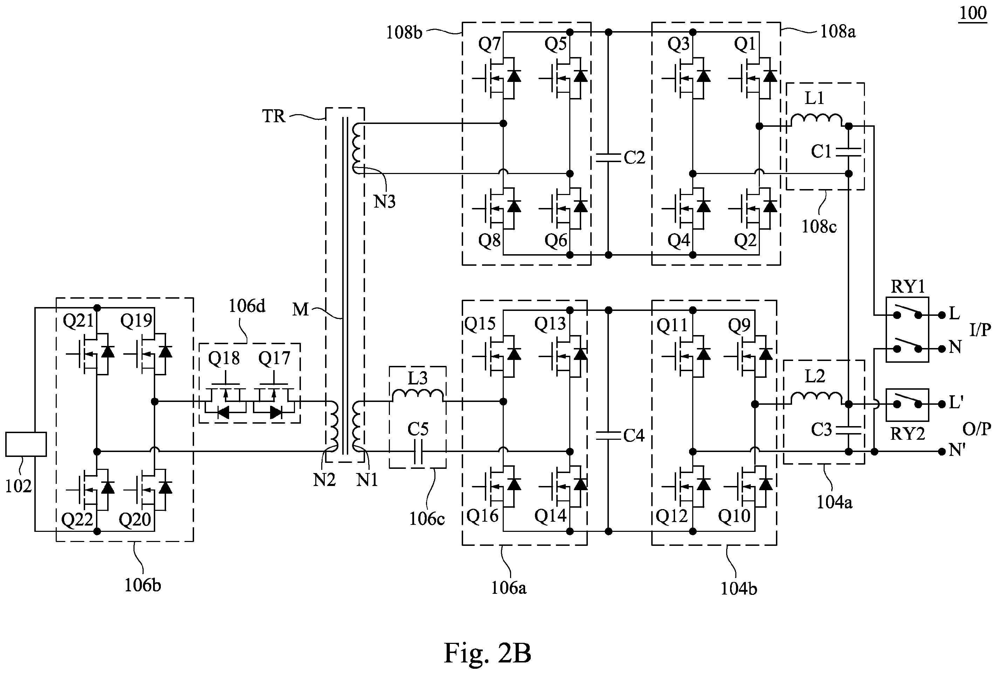

In the embodiment of Fig. 2B, the first resonant circuit 104a includes a third capacitor C3 and a second inductor L2. The first conversion circuit 104b includes a ninth switch Q9, a tenth switch Q10, an eleventh switch Q11, and a twelfth switch Q12. The first terminal of the third capacitor C3 is coupled to the second relay RY2, the second terminal of the first capacitor C1 (the third resonant circuit 108c), and the first terminal of the second inductor L2. The first terminal of the ninth switch Q9 is coupled to the second terminal of the second inductor L2 and the first terminal of the tenth switch Q10. The first terminal of the eleventh switch Q11 is coupled to the second terminal of the third capacitor C3 and the first terminal of the twelfth switch Q12. The second terminal of the eleventh switch Q11 is coupled to the second terminal of the ninth switch Q9. The second terminal of the twelfth switch Q12 is coupled to the second terminal of the tenth switch Q10.

In an embodiment, the control unit 110 is configured to control a switching control signal (not shown) for the ninth switch Q9, the tenth switch Q10, the eleventh switch Q11, and the twelfth switch Q12 of the first conversion circuit 104b, where the switching control signal is high-frequency switching pulse width modulation (PWM) signal, the frequency of the switching control signal is 10kHz or higher. In an embodiment, the switches of the first conversion circuit 104b are implemented by transistors, and the control unit 110 provides the switching control signal to the gate terminals of the ninth switch Q9, the tenth switch Q10, the eleventh switch Q11, and the twelfth switch Q12 to control the conducting/non-conducting states of these switches. In other embodiment, the control unit 110 may use pulse frequency modulated (PFM) signal, pulse skip modulated (PSM) signal, or the like as the switching control signal. The control unit 110 controls the first conversion circuit 104b to perform an AC-DC conversion or a DC-AC conversion.

In the embodiment of Fig. 2B, the second conversion circuit 106a includes a thirteenth switch Q13, a fourteenth switch Q14, a fifteenth switch Q15, and a sixteenth switch Q16. The third conversion circuit 106b includes a nineteenth switch Q19, a twentieth switch Q20, a twenty-first switch Q21, and a twenty-second switch Q22. The second resonant circuit 106c includes a fifth capacitor C5 and a third inductor L3. The charging switch circuit 106d includes a seventeenth switch Q17 and an eighteenth switch Q18. The transformer TR includes a magnetic core M, a first winding N1 wound on the magnetic core M, a second winding N2 wound on the magnetic core M, and a third winding N3 wound on the magnetic core M. The third winding N3 is coupled to the automatic voltage regulation circuit 108 to provide the voltage conversion required by the resonant converter 106 and the automatic voltage regulation circuit 108. In other embodiment, the transformer TR may include one or more magnetic cores and corresponding windings to provide the voltage conversion required by the resonant converter 106 and the automatic voltage regulation circuit 108. In other embodiment, the uninterruptible power supply system 100 may include one or more transformers to provide the voltage conversion required by the resonant converter 106 and the automatic voltage regulation circuit 108.

The first terminal of the fourth capacitor C4 is coupled to the second terminal of the eleventh switch Q11, the first terminal of the thirteenth switch Q13, and the first terminal of the fifteenth switch Q15. The second terminal of the fourth capacitor C4 is coupled to the second terminal of the twelfth switch Q12, the second terminal of the fourteenth switch Q14, and the second terminal of the sixteenth switch Q16. The first terminal of the fourteenth switch Q14 is coupled to the second terminal of the thirteenth switch Q13. The first terminal of the sixteenth switch Q16 is coupled to the second terminal of the fifteenth switch Q15. The first terminal of the third inductor L3 is coupled to the second terminal of the fifteenth switch Q15 and the first terminal of the sixteenth switch Q16, and the second terminal of the third inductor L3 is coupled to the first terminal of the first winding N1. The first terminal of the fifth capacitor C5 is coupled to the second terminal of the thirteenth switch Q13 and the first terminal of the fourteenth switch Q14, and the second terminal of the fifth capacitor C5 is coupled to the second terminal of the first winding N1. The first terminal of the seventeenth switch Q17 is coupled to the first terminal of the second winding N2. The first terminal of the eighteenth switch Q18 is coupled to the second terminal of the seventeenth switch Q17, and the second terminal of the eighteenth switch Q18 is coupled to the first terminal of the nineteenth switch Q19 and the first terminal of the twentieth switch Q20. The second terminal of the second winding N2 is coupled to the first terminal of the twenty-first switch Q21 and the first terminal of the twenty-second switch Q22. The second terminal of the twenty-first switch Q21 is coupled to the second terminal of the nineteenth switch Q19 and the first terminal of the battery 102. The second terminal of the twenty-second switch Q22 is coupled to the second terminal of the twentieth switch Q20 and the second terminal of the battery 102.

The control unit 110 is configured to control the switching control signal (not shown) for the thirteenth switch Q13, the fourteenth switch Q14, the fifteenth switch Q15 and the sixteenth switch Q16 of the second conversion circuit 106a and the nineteenth switch Q19, the twentieth switch Q20, the twenty-first switch Q21 and the twenty-second switch Q22 of the third conversion circuit 106b, which is implemented as appropriate signal such as high-frequency switching PWM, PFM, PSM, etc., and the frequency of the switching control signal is 10kHz or higher. In an embodiment, the switches of the second conversion circuit 106a and the third conversion circuit 106b are implemented by transistors, and the control unit 110 provides the switching control signal to the gate terminals of the thirteenth switch Q13, the fourteenth switch Q14, the fifteenth switch Q15, the sixteenth switch Q16, the nineteenth switch Q19, the twentieth switch Q20, the twenty-first switch Q21, and the twenty-second switch Q22 to respectively control these switches to be in the conducting/non-ducting states to respectively set the second conversion circuit 106a and the third conversion circuit 106b to perform an AC-DC conversion or a DC-AC conversion.

In the embodiment of Fig. 2B, the fourth conversion circuit 108a includes a first switch Q1, a second switch Q2, a third switch Q3, and a fourth switch Q4. The fifth conversion circuit 108b includes a fifth switch Q5, a sixth switch Q6, a seventh switch Q7, and an eighth switch Q8. The third resonant circuit 108c includes a first capacitor C1 and a first inductor L1. The first terminal of the first capacitor C1 is coupled to the first relay RY1, and the second terminal of the first capacitor C1 is coupled to the second relay RY2 and the bidirectional AC-DC converter 104. The first terminal of the first inductor L1 is coupled to the first relay RY1 and the first terminal of the first capacitor C1. The first terminal of the first switch Q1 is coupled to the second terminal of the first inductor L1 and the first terminal of the second switch Q2. The first terminal of the third switch Q3 is coupled to the second terminal of the first capacitor C1 and the first terminal of the fourth switch Q4, and the second terminal of the third switch Q3 is coupled to the second terminal of the first switch Q1. The second terminal of the fourth switch Q4 is coupled to the second terminal of the second switch Q2. The first terminal of the second capacitor C2 is coupled to the second terminal of the first switch Q1 and the second terminal of the third switch Q3, and the second terminal of the second capacitor C2 is coupled to the second terminal of the second switch Q2 and the second terminal of the fourth switch Q4. The first terminal of the fifth switch Q5 is coupled to the first terminal of the third winding N3 and the first terminal of the sixth switch Q6, and the second terminal of the fifth switch Q5 is coupled to the first terminal of the second capacitor C2. The second terminal of the sixth switch Q6 is coupled to the second terminal of the second capacitor C2. The first terminal of the seventh switch Q7 is coupled to the second terminal of the third winding N3 and the first terminal of the eighth switch Q8, and the second terminal of the seventh switch Q7 is coupled to the second terminal of the fifth switch Q5. The second terminal of the eighth switch Q8 is coupled to the second terminal of the sixth switch Q6.

The control unit 110 is configured to control the switching control signal (not shown) for the first switch Q1, the second switch Q2, the third switch Q3 and the fourth switch Q4 of the fourth conversion circuit 108a and the fifth switch Q5, the sixth switch Q6, the seventh switch Q7 and the eighth switch Q8 of the fifth conversion circuit 108b. The switching control signal may be implemented as appropriate signal such as high-frequency switching PWM, PFM, PSM, etc., and the frequency of the switching control signal is 10kHz or higher. In an embodiment, the control unit 110 provides a regulation signal to the gate terminals of the first switch Q1, the second switch Q2, the third switch Q3, the fourth switch Q4, the fifth switch Q5, the sixth switch Q6, the seventh switch Q7 and the eighth switch Q8 to control the conducting/non-conducting states of these switches to respectively set the fourth conversion circuit 108a and the fifth conversion circuit 108b to perform an AC-DC conversion or a DC-AC conversion. In addition, the control unit 110 may also control the second switch Q2 and the fourth switch Q4 of the fourth conversion circuit 108a to be in the conducting state and the first switch Q1 and the third switch Q3 to be in the non-conducting state, so that the AC input voltage I/P is bypassed to the bidirectional AC-DC converter 104 and the power output terminal Pout.

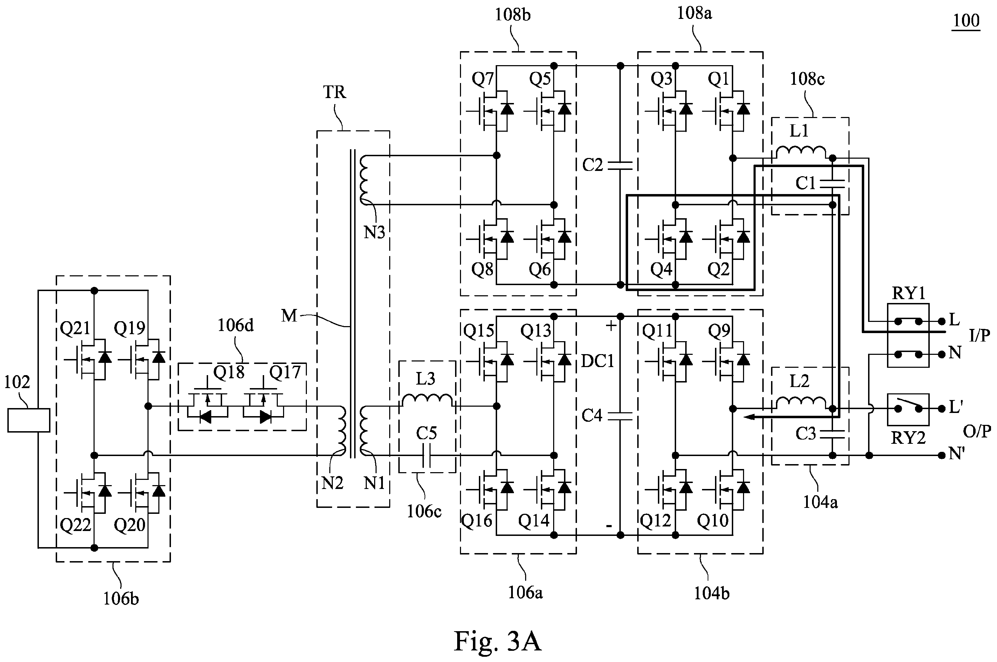

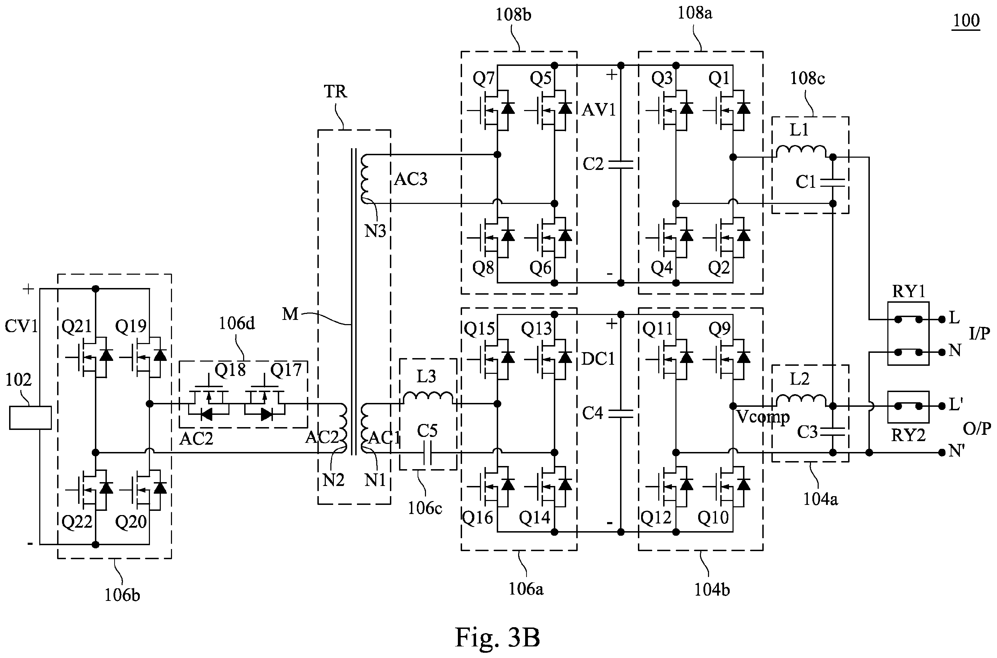

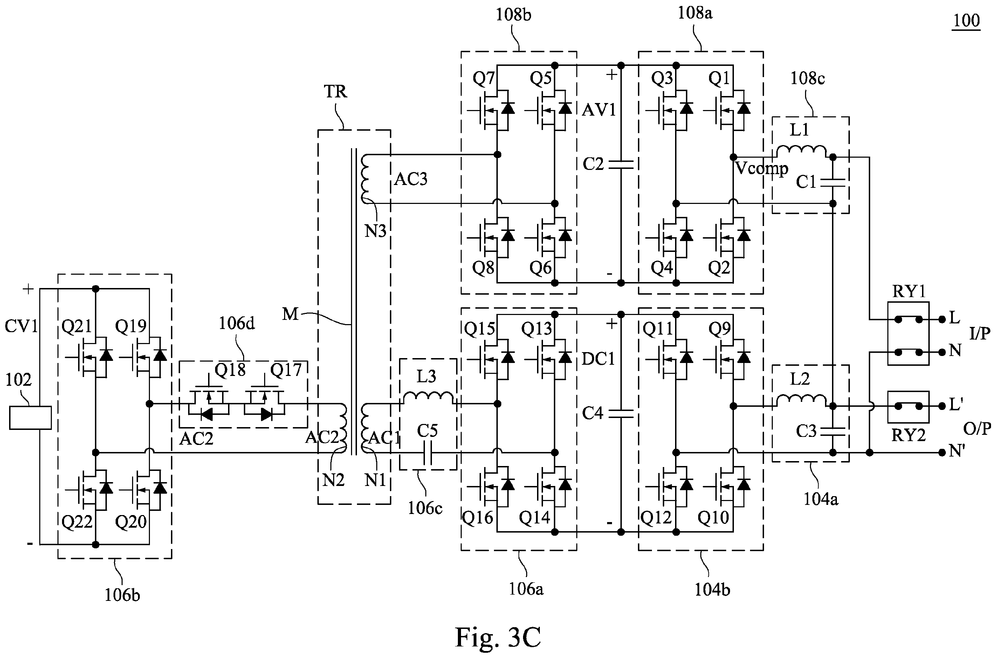

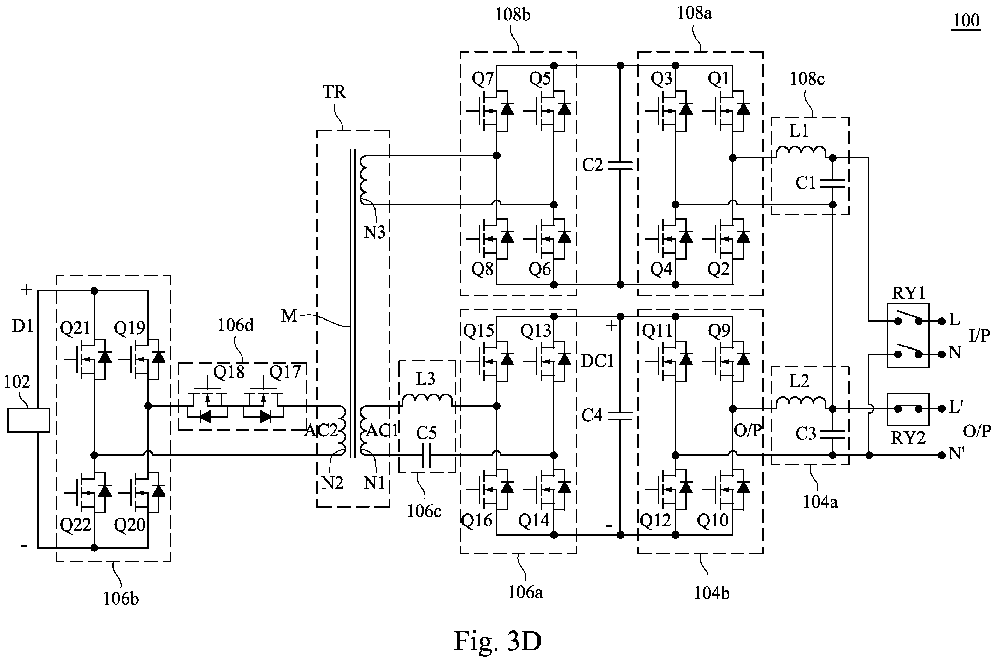

Figs. 3A-3D are schematic diagrams showing the uninterruptible power supply system 100 of Fig. 1 and 2A-2B operating in different modes. Fig. 3A is a schematic diagram of the uninterruptible power supply system 100 operating in a bypass mode according to an embodiment. Fig. 3B is a schematic diagram of the uninterruptible power supply system 100 operating in a voltage regulation mode with step-down output according to an embodiment. Fig. 3C is a schematic diagram of the uninterruptible power supply system 100 operating in a voltage regulation mode with step-up output according to an embodiment. Fig. 3D is a schematic diagram of the uninterruptible power supply system 100 operating in a battery-powered mode according to an embodiment.

When the uninterruptible power supply system 100 operates in an operation mode of Fig. 3A, the control unit 110 sets the first relay RY1 to be in the conducting state to receive the AC input voltage I/P. The control unit 110 sets the fourth conversion circuit 108a, with the second switch Q2 and the fourth switch Q4 are in the conducting state and the switches Q1, Q3 are in the non-conducting state, so that the AC input voltage I/P is transmitted to the bidirectional AC-DC converter 104 through the third resonant circuit 108c and the fourth conversion circuit 108a. The bidirectional AC-DC converter 104 performs an AC-DC conversion on the received AC input voltage I/P to generate a first DC voltage DC1 to be stored at two ends of the fourth capacitor C4. The resonant converter 106 converts the first DC voltage DC1 into a charging voltage CV1 (for example, the control unit 110 sets the second conversion circuit 106a, the second resonant circuit 106c, the transformer TR, the charging switch circuit 106d and the third conversion circuit 106b to convert the first DC voltage DC1 into the charging voltage CV1) to charge the battery 102 with the charging voltage CV1. The charging voltage CV1 may be a fixed or variable suitable voltage value. In an embodiment, the control unit 110 may charge the battery 102 using constant current charging or constant voltage charging. The control unit 110 sets the second conversion circuit 106a to perform a DC-AC conversion based on the first DC voltage DC1 to generate a first AC conversion signal AC1, and the transformer TR generates a third AC conversion signal AC3 based on the first AC conversion signal AC1. The control unit 110 sets the automatic voltage regulation circuit 108 to perform an AC-DC conversion based on the third AC conversion signal AC3 to generate a compensation voltage AV1 at two ends of the second capacitor C2.

In the embodiment of Fig. 3A, the control unit 110 sets the first relay RY1 and a portion of the fourth conversion circuit 108a to be in the conducting state (i.e., the second switch Q2 and the fourth switch Q4 are in the conducting state and the first switch Q1 and the third switch Q3 are in the non-conducting state). The AC input voltage I/P is transmitted to the first conversion circuit 104b via the first relay RY1, the third resonant circuit 108c, the fourth conversion circuit 108a, and the first resonant circuit 104a. The control unit 110 sets the first conversion circuit 104b to perform an AC-DC conversion to generate the first DC voltage DC1 at the fourth capacitor C4 of the resonant converter 106 based on the AC input voltage I/P.

In the embodiment of Fig. 3A, the control unit 110 sets the first relay RY1 to be in the conducting state, sets a portion of the fourth conversion circuit 108a to be in the conducting state (i.e., the second switch Q2 and the fourth switch Q4 are in the conducting state and the first switch Q1 and the third switch Q3 are in the non-conducting state), and sets the charging switch circuit 106d to be in the conducting state (i.e., the seventeenth switch Q17 and the eighteenth switch Q18 are in the conducting state). The second conversion circuit 106a converts the first DC voltage DC1 into the first AC conversion signal AC1 or other suitable AC signals. In an embodiment, the first AC conversion signal AC1 is a high frequency signal, for example, the frequency of the first AC conversion signal AC1 is set to be greater than or equal to 10 kHz. The transformer TR generates a second AC conversion signal AC2 and the third AC conversion signal AC3 respectively to the charging switch circuit 106d and the fifth conversion circuit 108b based on the first AC conversion signal AC1. The charging switch circuit 106d receives the second AC conversion signal AC2 and transmits the second AC conversion signal AC2 to the third conversion circuit 106b. The third conversion circuit 106b receives the second AC conversion signal AC2 when the charging switch circuit 106d is in the conducting state, and converts the second AC conversion signal AC2 into the charging voltage CV1 and charges the battery 102 with the charging voltage CV1. In addition, the fifth conversion circuit 108b converts the third AC conversion signal AC3 into the compensation voltage AV1 and establishes the compensation voltage AV1 at the second capacitor C2.

In an embodiment, the control unit 110 may control the bidirectional AC-DC converter 104 and the resonant converter 106 to adjust the charging voltage CV1 of the battery 102, thereby performing charging operations such as constant voltage charging or constant current charging. In an embodiment, when the energy storage of the battery 102 is oversaturated or saturated (i.e., the voltage of the battery 102 is greater than or equal to a voltage threshold), the control unit 110 may control the seventeenth switch Q17 and the eighteenth switch Q18 to be in the non-conducting state, so as to prevent the battery 102 from being damaged due to excessive stored energy (i.e., an excessively high charging voltage CV1).

In the uninterruptible power supply system 100, the control unit 110 detects and determines the voltage value of the AC input voltage I/P (e.g., the control unit 110 makes a determination based on a voltage signal of the AC input voltage I/P detected by a sensor that is disposed at a suitable location such as the power input terminal Pin) to determine in which mode the uninterruptible power supply system 100 operates. When the control unit 110 determines that the voltage value of the AC input voltage I/P is within the predetermined voltage range (e.g., within 90V-130V), the control unit 110 sets the uninterruptible power supply system 100 to operate in the bypass mode, and the control unit 110 sets the automatic voltage regulation circuit 108, so that the AC input voltage I/P is bypassed as the AC output voltage O/P through the first relay RY1, the fourth conversion circuit 108a (the second switch Q2 and the fourth switch Q4 are in the conducting state, and the first switch Q1 and the third switch Q3 are in the non-conducting state) and the second relay RY2.

When the uninterruptible power supply system 100 operates in the operation mode of Figs. 3B-3C, when the control unit 110 determines that the voltage value of the AC input voltage I/P is out of the predetermined voltage range but still within the voltage regulation range (for example, within 60V-90V or 130V-150V), the control unit 110 sets the uninterruptible power supply system 100 to operate the voltage regulation mode. According to whether the voltage value of the AC input voltage I/P is higher or lower than the predetermined voltage range, the control unit 110 controls the automatic voltage regulation circuit 108 to generate an AC supplementary voltage Vcomp based on the AC input voltage I/P, and generates the AC output voltage O/P based on the AC input voltage I/P and the AC supplementary voltage Vcomp (for example, the AC input voltage I/P and the AC supplementary voltage Vcomp are superimposed as the AC output voltage O/P), and the AC output voltage O/P is within the predetermined voltage range. In an embodiment, the maximum value of the voltage regulation range is greater than the maximum value of the predetermined voltage range, and the minimum value of the voltage regulation range is less than the minimum value of the predetermined voltage range. In other embodiment, it is also possible to set only the maximum value of the voltage regulation range to be greater than the maximum value of the predetermined voltage range (while the minimum values are equal), or to set only the minimum value of the voltage regulation range to be less than the minimum value of the predetermined voltage range (while the maximum values are equal).

In the embodiment of Fig. 3B, when the voltage value of the AC input voltage I/P is greater than the upper limit voltage of the predetermined voltage range but still within the voltage regulation range, the control unit 110 determines that the AC input voltage I/P is greater than the predetermined voltage range and needs to activate the voltage regulation function to step down the AC input voltage I/P, so that the AC output voltage O/P is within the predetermined voltage range. The control unit 110 sets the first relay RY1 and the second relay to be in the conducting state. After the AC input voltage I/P is transmitted through the first relay RY1 and the third resonant circuit 108c, the control unit 110 controls the fourth conversion circuit 108a to perform an AC-DC conversion to generate a suitable compensation voltage AV1 at the second capacitor C2. The control unit 110 controls the fifth conversion circuit 108b to perform a DC-AC conversion to convert the compensation voltage AV1 into the third AC conversion signal AC3, and the control unit 110 sets the transformer TR and the second conversion circuit 106a of the resonant converter 106 to perform an AC-DC conversion to convert the third AC conversion signal AC3 into a suitable first DC voltage DC1 at the fourth capacitor C4. The control unit 110 controls the first conversion circuit 104b (i.e., the bidirectional AC-DC converter 104) to perform a DC-AC conversion to convert the first DC voltage DC1 into a suitable AC supplementary voltage Vcomp. In this embodiment, the AC supplementary voltage Vcomp may have a phase difference with the AC input voltage I/P (for example, the phase difference between the AC supplementary voltage Vcomp and the peak of the AC input voltage I/P is 180 degrees), and is superimposed on the AC input voltage I/P at the first resonant circuit 104a to be output to the power output terminal Pout and the neutral wire terminal N', so that the AC output voltage O/P (i.e., the AC supplementary voltage Vcomp having the phase difference superimposed with the AC input voltage I/P) is within the predetermined voltage range, thereby achieving the voltage regulation function. In one embodiment, the control unit 110 sets the resonant converter 106 to convert the third AC conversion signal AC3 into the charging voltage CV1 to charge the battery 102. In one embodiment, the control unit 110 may also set the second relay RY2 to be in the conducting state after determining that the voltage-regulated AC output voltage O/P is within the predetermined voltage range. The control unit 110 may determine whether the AC input voltage I/P is within the predetermined voltage range or the voltage regulation range according to the root mean square, peak value, and/or valley value of the AC input voltage I/P, etc. For example, when the root mean square of the AC input voltage I/P is 140V, the control unit 110 determines that the AC input voltage I/P of 140V exceeds the upper limit voltage of the predetermined voltage range (e.g., 130V), and the control unit 110 sets the automatic voltage regulation circuit 108, the resonant converter 106, and the bidirectional AC-DC converter 104 to generate a corresponding AC supplementary voltage Vcomp (e.g., the phase difference between the AC supplementary voltage Vcomp and the AC input voltage I/P is 180 degrees), so that the regulated AC output voltage O/P (e.g., the AC supplementary voltage Vcomp superimposed with the AC input voltage I/P) is within the predetermined voltage range (90V-130V). In other embodiment, the control unit 110 may also adopt other appropriate signal processing methods to generate the AC output voltage O/P based on the AC supplementary voltage Vcomp and the AC input voltage I/P, so that the AC output voltage O/P is within the predetermined voltage range.

In the embodiment of Fig. 3C, when the voltage value of the AC input voltage I/P is lower than the lower limit voltage of the predetermined voltage range but is still within the voltage regulation range, the control unit 110 determines that the AC input voltage I/P is lower than the predetermined voltage range and needs to activate the voltage regulation function to step up the AC input voltage I/P, so that the AC output voltage O/P is within the predetermined voltage range. The control unit 110 sets the first relay RY1 and the second relay RY2 to be in the conducting state. After the AC input voltage I/P is transmitted through the first relay RY1 and the third resonant circuit 108c, the control unit 110 controls the fourth conversion circuit 108a to perform a DC-AC conversion to generate a suitable AC supplementary voltage Vcomp based on the compensation voltage AV1 of the second capacitor C2. In this embodiment, the AC supplementary voltage Vcomp may have a similar phase to the AC input voltage I/P (for example, the phase difference between the AC supplementary voltage Vcomp and the peak of the AC input voltage I/P is 0 degrees) and is superimposed on the AC input voltage I/P at the third resonant circuit 108c to be output to the power output terminal Pout and the neutral wire terminal N', so that the AC output voltage O/P (for example, the AC supplementary voltage Vcomp superimposed with the AC input voltage I/P) is within the predetermined voltage range, thereby achieving the voltage regulation function. In addition, the control unit 110 controls the first conversion circuit 104b (i.e., the bidirectional AC-DC converter 104) to perform an AC-DC conversion to generate the first DC voltage DC1 at the fourth capacitor C4 based on the AC output voltage O/P. The control unit 110 controls the second conversion circuit 106a of the resonant converter 106 to perform a DC-AC conversion to generate the first AC conversion signal AC1 based on the first DC voltage DC1, and generates the third AC conversion signal AC3 through the transformer TR. The control unit 110 controls the fifth conversion circuit 108b to perform an AC-DC conversion to generate the compensation voltage AV1 at the second capacitor C2 based on the third AC conversion signal AC3. In an embodiment, the control unit 110 sets the resonant converter 106 to perform a DC-DC conversion to convert the first DC voltage DC1 into the charging voltage CV1 to charge the battery 102. In an embodiment, the control unit 110 may also set the second relay RY2 to be in the conducting state after determining that the voltage-regulated AC output voltage O/P is within the predetermined voltage range. The control unit 110 may determine whether the AC input voltage I/P is within the predetermined voltage range or the voltage regulation range according to the root mean square, peak value, and/or valley value of the AC input voltage I/P, etc. For example, when the root mean square of the AC input voltage I/P is 70V, the control unit 110 determines that the AC input voltage I/P of 70V is lower than the lower limit voltage of the predetermined voltage range (e.g., 90V), and the control unit 110 sets the automatic voltage regulation circuit 108, the resonant converter 106, and the bidirectional AC-DC converter 104 to generate a corresponding AC supplementary voltage Vcomp (e.g., the phase difference between the AC supplementary voltage Vcomp and the AC input voltage I/P is 0 degrees), so that the regulated AC output voltage O/P (e.g., the AC supplementary voltage Vcomp superimposed with the AC input voltage I/P) is within the predetermined voltage range (90V-130V). In other embodiment, the control unit 110 may also adopt other appropriate signal processing methods to generate the AC output voltage O/P based on the AC supplementary voltage Vcomp and the AC input voltage I/P, so that the AC output voltage O/P is within the predetermined voltage range.

Therefore, when the uninterruptible power supply system 100 is in the voltage regulation mode of the embodiment of Figs. 3B-3C, no matter whether the AC input voltage I/P is greater or lower than the predetermined voltage range, the control unit 110 may generate a suitable AC supplementary voltage Vcomp by setting the automatic voltage regulation circuit 108, the resonant converter 106 and the bidirectional AC-DC converter 104, and may generate the AC output voltage O/P based on the AC supplementary voltage Vcomp and the AC input voltage I/P, so that the AC output voltage O/P output by the uninterruptible power supply system 100 may be within the predetermined voltage range, thereby achieving the voltage regulation function.

When the control unit 110 determines that the voltage value of the AC input voltage I/P is out of the voltage regulation range (e.g., less than 60V or greater than 150V), the control unit 110 sets the uninterruptible power supply system 100 to operate in the battery-powered mode. When the uninterruptible power supply system 100 operates in the battery-powered mode, the control unit 110 sets the automatic voltage regulation circuit 108 to be disabled, and converts the discharge voltage D1 of the battery 102 into the AC output voltage O/P through the resonant converter 106 and the bidirectional AC-DC converter 104, so as to output the AC output voltage O/P to the power output terminal Pout and the neutral wire terminal N'.

As shown in the embodiments of Figs. 1, 2A-2B, 3D, when the AC input voltage I/P is out of the voltage regulation range, the uninterruptible power supply system 100 operates in the battery-powered mode, the control unit 110 sets the second relay RY2 and the charging switch circuit 106d to be in the conducting state, and the control units 110 sets the first relay RY1 to be in the non-conducting state and sets the automatic voltage regulation circuit 108 to be disabled. The control unit 110 sets the third conversion circuit 106b to perform a DC-AC conversion based on the discharge voltage D1 of the battery 102 to convert into the second AC conversion signal AC2 at the second winding N2. The transformer TR generates the first AC conversion signal AC1 at the first winding N1 based on the second AC conversion signal AC2. The control unit 110 sets the second resonant circuit 106c and the second conversion circuit 106a to perform an AC-DC conversion based on the first AC conversion signal AC1 to generate the first DC voltage DC1 at the fourth capacitor C4. The control units 110 sets the first conversion circuit 104b to perform a DC-AC conversion based on the first DC voltage DC1 to generate the AC output voltage O/P to transmit to the power output terminal Pout and the neutral wire terminal N', so that the AC output voltage O/P is within the predetermined voltage range.

The predetermined voltage range and the voltage regulation range of the uninterruptible power supply system 100 may be appropriately adjusted based on various design considerations, respectively. In an embodiment, by setting the predetermined voltage range to 0, the uninterruptible power supply system 100 will regulate the AC input voltage I/P before outputting the AC output voltage O/P, resulting in a more stable AC output voltage O/P and a better power factor. In this embodiment, the uninterruptible power supply system 100 only operates in the voltage regulation mode and the battery-powered mode. In addition, the predetermined voltage range of the AC input voltage I/P and the predetermined voltage range of the AC output voltage O/P of the uninterruptible power supply system 100 may be set to be the same or different. In other embodiment, the uninterruptible power supply system 100 may be set to only operate in the voltage regulation mode and the bypass mode or to only operate in the battery-powered mode and the bypass mode.

The execution order of the above operation modes of the uninterruptible power supply system 100 is not limited, and the control unit 110 may set the uninterruptible power supply system 100 to operate in a suitable operation mode based on the AC input voltage I/P. In addition, when the uninterruptible power supply system 100 is in operation, an appropriate startup procedure may be employed. In the startup procedure of an embodiment, the battery 102 has a certain amount of charge, the control unit 110 sets the first relay RY1 and the second RY2 to be in the non-conducting state and sets the resonant converter 106 and the automatic voltage regulation circuit 108 to be enabled, so as to generate the compensation voltage AV1 at the second capacitor C2 and the first DC voltage DC1 at the fourth capacitor C4 from the discharge voltage D1 of the battery 102. Thereafter, the control unit 110 sets the first relay RY1 and the second relay RY2 to be in the conducting state and sets the uninterruptible power supply system 100 to operate in the bypass mode, the voltage regulation mode, or the battery-powered mode based on the AC input voltage I/P.

In above embodiments, each resonant circuit may be respectively implemented by using appropriate structures and circuit elements such as LC, LLC, LCL, RLC, etc. Each conversion circuit may be respectively implemented by H-bridge circuits, bridge circuits, or conversion circuits including switches and suitable circuit elements, etc. The control unit 110 may use appropriate control signals such as PWM, PFM, PSM, etc. to set each conversion circuit to respectively perform voltage conversion such as AC-DC conversion, DC-DC conversion, and DC-AC conversion, etc.

Therefore, it can be seen from the above-mentioned embodiments of the disclosure that the resonant converter 106 and the automatic voltage regulation circuit 108 of the uninterruptible power supply system 100 of the disclosure share and coupled through the transformer TR (composed of the magnetic core M, the first winding N1, the second winding N2 and the third winding N3), so that the resonant converter 106 and the automatic voltage regulation circuit 108 may regulate and compensate the AC input voltage I/P. Therefore, the disclosure may reduce cost due to the amount of components and increase the life cycle of the battery 102.

In addition, the conventional low-frequency AVR typically uses a metal casing with a silicon steel sheet magnetic core, which results in large copper and iron losses. However, the high-frequency automatic voltage regulation circuit 108 of the disclosure uses a material with an iron magnetic core, which reduces copper and iron losses. Therefore, the disclosure may reduce copper and iron losses as well as transportation costs.

In addition, the conventional low-frequency AVR typically uses more relays to regulate the mains voltage, which results in a larger volume and heavier weight of the low-frequency AVR. However, the high-frequency automatic voltage regulation circuit 108 of the disclosure uses fewer relays and transistor switches to regulate the mains voltage, which result in a smaller volume and lighter weight of the high-frequency automatic voltage regulation circuit 108. Therefore, the disclosure may reduce the weight and volume of the machine.

In addition, the high-frequency automatic voltage regulation circuit 108 operates above 10kHz, and uses the bidirectional LCC full-bridge converter (i.e., the resonant converter 106) to simultaneously perform battery charging and discharging, thereby reducing the volume of the transformer and the amount of components, and improving the overall efficiency of system.

In addition, the bidirectional AC-DC converter 104 of the uninterruptible power supply system 100 may use a totem-pole power factor correction (totem-pole PFC) circuit architecture and the resonant converter 106 of the uninterruptible power supply system 100 may be implemented by a bidirectional LLC full-bridge converter, so that the uninterruptible power supply system 100 has active filtering or power factor correction functions. Therefore, the uninterruptible power supply system 100 may eliminate or reduce the harmonic current pollution of power electronic equipment and may maintain the stability of the sine wave output voltage to improve system efficiency and stability.

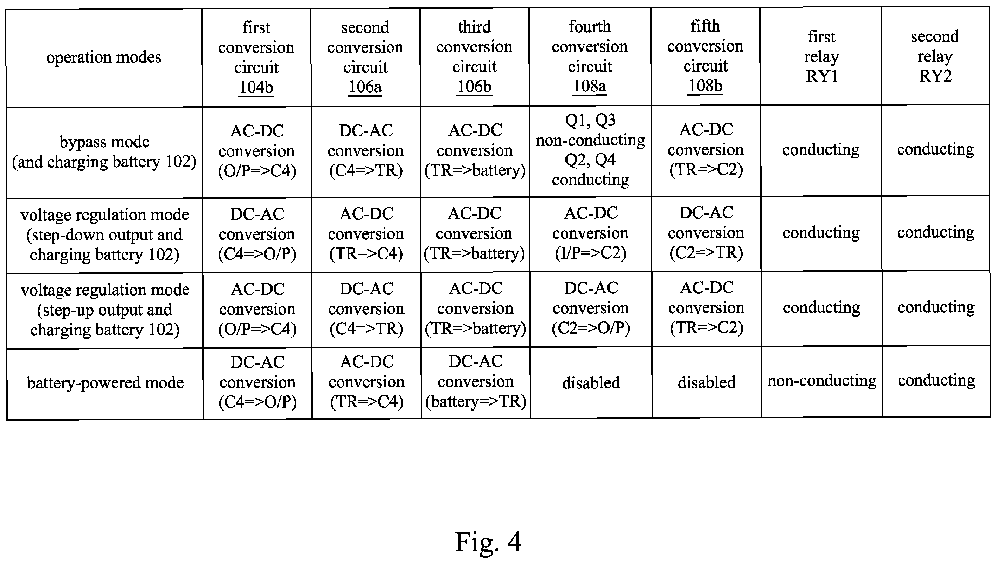

The operation of each conversion circuit of the uninterruptible power supply system 100 in different modes is briefly summarized as shown in Fig. 4. Fig. 4 is an embodiment of the conversion circuits of the uninterruptible power supply system in various operation modes. As shown in Fig. 4, the uninterruptible power supply system 100 may operate in the bypass mode, the voltage regulation mode with step-down output, the voltage regulation mode with step-up output, and the battery-powered mode. When the uninterruptible power supply system 100 is in the bypass mode, the first relay RY1 and the second switch Q2 and the fourth switch Q4 of the fourth conversion circuit 108a are in the conducting state to bypass the AC input voltage I/P to the first conversion circuit 104b, and the AC input voltage I/P is converted into the charging voltage CV1 to charge the battery 102. When the uninterruptible power supply system 100 is in the voltage regulation mode with step-down output, the AC supplementary voltage Vcomp with relatively large phase difference is generated through the operation of the first conversion circuit 104b, the second conversion circuit 106a, the fourth conversion circuit 108a, and the fifth conversion circuit 108b to step down the AC output voltage O/P to the predetermined voltage range. When the uninterruptible power supply system 100 is in the voltage regulation mode with step-up output, the AC output voltage O/P is step up to the predetermined voltage range by the AC input voltage I/P and by generating the AC supplementary voltage Vcomp with relatively small phase difference. When the uninterruptible power supply system 100 is in the battery-powered mode, the fourth conversion circuit 108a and the fifth conversion circuit 108b are disabled, the battery 102 is discharged to convert into the AC output voltage O/P.

## Claims

1. An uninterruptible power supply system (100), **characterized in that**, the uninterruptible power supply system is configured to be coupled to an AC input voltage (I/P) and a battery (102), and comprises:
a bidirectional AC-DC converter (104), configured to be coupled to a power input terminal (Pin) to receive the AC input voltage and configured to be coupled to a power output terminal (Pout) to output an AC output voltage (O/P);
a resonant converter (106), coupled to the bidirectional AC-DC converter, and configured to be coupled to the battery, wherein the resonant converter comprises a transformer (TR), the transformer comprises a magnetic core (M), a first winding (N1), a second winding (N2), and a third winding (N3), the first winding, the second winding, and the third winding are wound on the magnetic core;
an automatic voltage regulation circuit (108), coupled to the bidirectional AC-DC converter and the third winding of the transformer, and configured to be coupled to the power input terminal and the power output terminal; and
a control unit (110), coupled to the bidirectional AC-DC converter, the resonant converter, and the automatic voltage regulation circuit,
when the AC input voltage is out of a predetermined voltage range and is within a voltage regulation range, the control unit sets the automatic voltage regulation circuit, the resonant converter, and the bidirectional AC-DC converter to generate an AC supplementary voltage (Vcomp) at the power output terminal based on the AC input voltage and to generate the AC output voltage based on the AC input voltage and the AC supplementary voltage, so that the AC output voltage is within the predetermined voltage range,
when the AC input voltage is out of the voltage regulation range, the control unit sets the resonant converter and the bidirectional AC-DC converter to generate the AC output voltage at the power output terminal based on a discharge voltage (D1) of the battery, so that the AC output voltage is within the predetermined voltage range,
wherein a maximum value of the voltage regulation range is greater than a maximum value of the predetermined voltage range, and a minimum value of the voltage regulation range is less than a minimum value of the predetermined voltage range.

2. The uninterruptible power supply system of claim 1, wherein when the AC input voltage is within the voltage regulation range, the bidirectional AC-DC converter generates a first DC voltage (DC1) based on the AC input voltage, and the resonant converter converts the first DC voltage into a charging voltage (CV1) to charge the battery.

3. The uninterruptible power supply system of claim 2, wherein the resonant converter generates a first AC conversion signal (AC1) at the first winding based on the first DC voltage, the transformer generates a third AC conversion signal (AC3) at the third winding based on the first AC conversion signal, and the automatic voltage regulation circuit generates a compensation voltage (AV1) based on the third AC conversion signal.

4. The uninterruptible power supply system of claim 2, wherein the bidirectional AC-DC converter further comprises a first conversion circuit (104b) configured to generate the first DC voltage based on the AC input voltage, the resonant converter further comprises:
a second conversion circuit (106a), coupled to the first conversion circuit and the first winding of the transformer, and generating a first AC conversion signal (AC1) at the first winding based on the first DC voltage; and
a third conversion circuit (106b), coupled to the second winding of the transformer and configured to be coupled to the battery,
wherein the transformer generates a second AC conversion signal (AC2) at the second winding based on the first AC conversion signal, and the third conversion circuit generates the charging voltage based on the second AC conversion signal.

5. The uninterruptible power supply system of claim 1, wherein the automatic voltage regulation circuit further comprises:
a fourth conversion circuit (108a), configured to be coupled to the power input terminal; and
a fifth conversion circuit (108b), coupled to the fourth conversion circuit and the third winding of the transformer,
when the AC input voltage is greater than an upper limit voltage of the predetermined voltage range and is within the voltage regulation range, the control unit sets the fourth conversion circuit to perform an AC-DC conversion to generate a compensation voltage (AV1) based on the AC input voltage, the control unit sets the fifth conversion circuit to perform a DC-AC conversion to generate a third AC conversion signal (AC3) based on the compensation voltage, the control unit sets the resonant converter to perform an AC-DC conversion to generate a first DC voltage (DC1) based on the third AC conversion signal, the control unit sets the bidirectional AC-DC converter to perform a DC-AC conversion to generate the AC supplementary voltage at the power output terminal based on the first DC voltage and to generate the AC output voltage based on the AC input voltage and the AC supplementary voltage, so that the AC output voltage is within the predetermined voltage range.

6. The uninterruptible power supply system of claim 5, wherein the control unit sets the resonant converter to convert the third AC conversion signal into a charging voltage (CV1) to charge the battery.

7. The uninterruptible power supply system of claim 1, wherein the automatic voltage regulation circuit further comprises:
a fourth conversion circuit (108a), configured to be coupled to the power input terminal; and
a fifth conversion circuit (108b), coupled to the fourth conversion circuit and the third winding of the transformer,
when the AC input voltage is less than a lower limit voltage of the predetermined voltage range and is within the voltage regulation range, the control unit sets the fourth conversion circuit to perform a DC-AC conversion to generate the AC supplementary voltage based on a compensation voltage (AV1), and to generate the AC output voltage based on the AC input voltage and the AC supplementary voltage, so that the AC output voltage is within the predetermined voltage range, the control unit sets the bidirectional AC-DC converter to perform an AC-DC conversion to generate a first DC voltage (DC1) based on the AC output voltage, the control unit sets the resonant converter to perform a DC-AC conversion to generate a third AC conversion signal (AC3) based on the first DC voltage, the control unit sets the fifth conversion circuit to perform an AC-DC conversion to generate the compensation voltage based on the third AC conversion signal.

8. The uninterruptible power supply system of claim 7, wherein the control unit sets the resonant converter to convert the first DC voltage into a charging voltage (CV1) to charge the battery.

9. The uninterruptible power supply system of any one of claims 1 to 8, wherein when the AC input voltage is within the predetermined voltage range, the control unit sets the automatic voltage regulation circuit to bypass the AC input voltage as the AC output voltage.

10. The uninterruptible power supply system of claim 1, wherein the bidirectional AC-DC converter further comprises a first conversion circuit (104b), the resonant converter further comprises:
a second conversion circuit (106a), coupled to the first conversion circuit and the first winding of the transformer; and
a third conversion circuit (106b), coupled to the second winding of the transformer and configured to be coupled to the battery,
when the control unit determines that the AC input voltage is out of the voltage regulation range, the control unit sets the third conversion circuit to perform a DC-AC conversion to generate a second AC conversion signal (AC2) at the second winding based on the discharge voltage of the battery, the transformer generates a first AC conversion signal (AC1) at the first winding based on the second AC conversion signal, the control unit sets the second conversion circuit to perform an AC-DC conversion to generate a first DC voltage (DC1) based on the first AC conversion signal, the control unit sets the first conversion circuit to perform a DC-AC conversion to generate the AC output voltage based on the first DC voltage.
